# EUROPEAN PATENT SPECIFICATION

(11) **EP 3 168 391 B1**
(45) Date of publication and mention of the grant of the patent: **17.07.2019**
(21) Application number: 16197669.1
(22) Date of filing: 08.11.2016
(51) Int. Cl.: E04H 12/22, E02D 5/80

(54) **SCREWTHREADED POLE**
PFOSTEN MIT SCHRAUBGEWINDE
PÔLE FILETÉ

(30) Priority: 13.11.2015 CA 2911981
(43) Date of publication of application: 17.05.2017
(73) Proprietor: Cote, Paul L., Lac Brome, Québec J0E 1V0 (CA)
(72) Inventor: Cote, Paul L., Lac Brome, Québec J0E 1V0 (CA)
(74) Representative: Glück Kritzenberger Patentanwälte PartGmbB

(56) References cited:
- EP-A1- 1 692 960
- WO-A1-01/77444
- US-A1- 2012 036 797

## Description

### FIELD OF THE INVENTION

The present invention relates to a pole designed to be inserted into the ground and more particularly, relates to a pole insertable into the soil and which may support other objects.

### BACKGROUND OF THE INVENTION

The use of poles which are insertable into the soil is well known in the art. Such poles typically have a screwthread formed at one end thereof and are inserted into the soil or ground by applying a rotational torque to the pole. Typically, the rotational torque is imparted by means of a horizontal lever which will engage with the vertical pole and a force being applied to the horizontal member.

The pole is typically utilized to support a further object. The further object may be something which is placed on the pole or alternatively, the pole may form a series of members which are interconnected in one manner or another to form a structure such as a fence.

EP 1 692 960 A1 discloses a tubular supporting element for a beach and/or garden sunshade comprising, at one end, a tip portion which has a helical contour and is adapted to be driven into the ground or sand.

WO 01/77444 A1 discloses a screw form anchor device intended for screwed penetration into a host material. The anchor device includes a body having a manipulating end and a distal end. A screw thread is formed by a plurality of tapering angular helix thread forms which extend from the distal end. Each angular helix thread form has an outward facing surface and, relative to the distal end, a downward facing surface. An emergent helix thread commences from a point distant from the distal end. This emergent helix thread extends toward the manipulating end of the body.

A problem which arises with such poles is their inability to resist horizontal or other forces applied to the pole. Typically, the engagement of the threaded portion with the soil is not sufficient to overcome such forces and as a result, the pole either leans to one side or falls over.

### SUMMARY OF THE INVENTION

It is an object of the present invention to provide a pole which is insertable into the soil and which pole has a substantial resistance to horizontal or other forces applied thereto.
The present invention provides a pole designed to be inserted into the ground, the pole having a lower tapered segment at one end thereof, the lower tapered segment having double helical threads thereon, and an upper segment. The double helical threads are arranged such that a first one of the threads extends outwardly for a first distance while a second one of the threads extends outwardly a second distance, the first distance being larger than the second distance. The second helical thread is provided intermediate of said first helical thread. This arrangement is advantageous in that the first thread which extends outwardly a greater distance will tend to compact the soil between adjacent threads. The second helical thread, which extends outwardly a lesser distance, will then tend to bite into the compact soil and reinforce the grip thereon. The depth or height of the threads can vary as is known to those skilled in the art. Typically, the first helical thread would extend outwardly by a distance equal to between 5.0 mm and 7.5 mm while the second helical thread would preferably extend outwardly by a distance between 2.5 mm and 4.0 mm. In a preferred arrangement, the ratio between the depth of thread between the first helical thread and the second helical thread would be 2:1.

The use of the different sized threads also provides for a smoother action and prevents what could be referred to as cavitation in the soil.

In one embodiment, the pole has the aforementioned upper segment and the lower threaded segment. Intermediate the upper and lower segments is an intermediate segment also having a tapered configuration. In this embodiment, the intermediate segment would taper inwardly from the point of joinder with the upper segment through the lower threaded segment. This arrangement provides for the intermediate segment to help in compaction of the soil and to ensure that the soil remains compacted.

The thread form may be of any convenient shape including, among others, square, triangular, trapezoidal, etc. In a preferred embodiment, the thread form employed in the present invention is triangular and more particularly, is based on an isosceles triangle. The screwthread may be truncated with preferably the second helical thread being somewhat more truncated than the first thread.

The thread angle may be any suitable as is clearly established in the art. The lead in a typical arrangement would be between 1 and 4 cm.

In a preferred embodiment, the pole has an upper segment which is cylindrical in configuration and a lower segment which is of a tapered configuration.

The pole may be formed of any suitable material including, for example, metallic materials, reinforced plastic materials, etc. Such suitable materials are well known to those knowledgeable in the art and need not be discussed further herein.

The sizing of the pole can vary depending upon the required end use and the type of soil into which the pole is to be inserted. Again, it suffices to say that one skilled in the art could determine the required size.

The pole of the present invention may be used for many different purposes. Preferred embodiments would include the use of other objects placed thereon, such objects being things like planters, bird feeders, etc.

### BRIEF DESCRIPTION OF THE DRAWINGS

Having thus generally described the invention, reference will be made to the accompanying drawings illustrating an embodiment thereof, in which:
Figure 1 is a perspective view of a screwthreaded pole according to an embodiment of the present invention;
Figure 2 is a perspective view of a screwthreaded pole according to the prior art;
Figure 3 is a cross-sectional view illustrating the pole of Figure 2 and the immediate environment when the pole has been inserted into the soil;
Figure 4 is a view similar to Figure 2 showing the total environment of the pole of Figure 2 after insertion in soil;
Figure 5 is a cross-sectional view of the screwthreaded pole of Figure 1 and the immediate environment after insertion into the soil;
Figure 6 is a view illustrating the screwthreaded pole of Figure 4 and the total environment surrounding the pole after insertion in soil;
Figure 7 is a cross-sectional view of a bottom portion of a screwthreaded pole and the immediate environment after insertion into soil; and
Figure 8 is a view of the pole of Figure 7 and the total environment surrounding the pole after insertion in the soil.

### DETAILED DESCRIPTION OF THE INVENTION

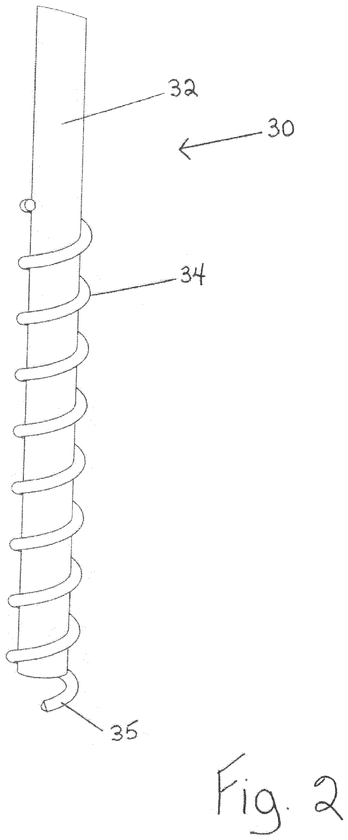

Referring to the drawings in greater detail and by reference characters thereto, there is illustrated in Figures 2 to 4 a prior art threaded pole. In this embodiment, the threaded pole is generally designated by reference numeral 30 and includes a constant diameter pole 32 having a helical screwthread 34 extending about a portion of pole 32. The lower end 35 of screwthread 34 may be formed downwardly of pole 32 to provide a means of engaging the earth initially.

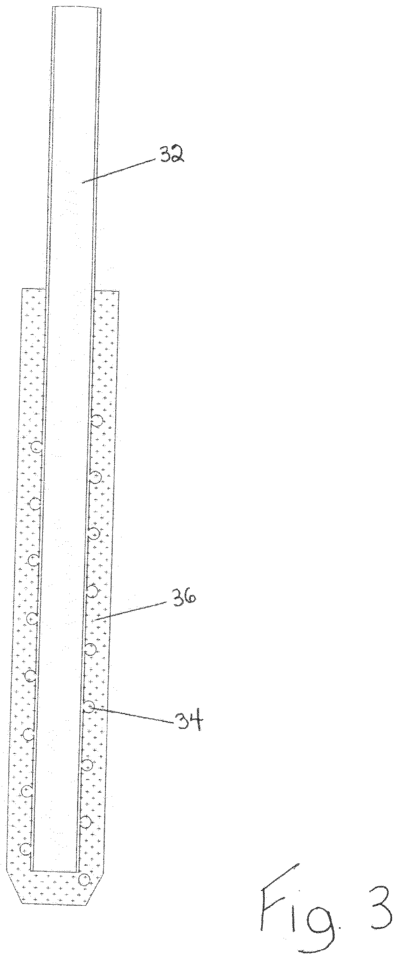

Figure 3 shows pole 32 after engagement with the soil. The soil is designated by reference numeral 36 and comprises "disturbed soil" which is relatively loose after being disturbed by the insertion of pole 32.

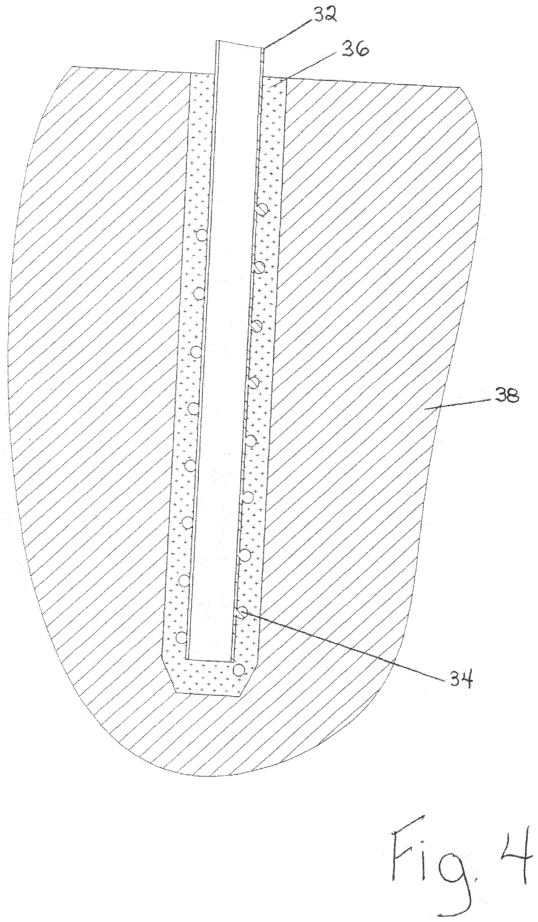

As shown in Figure 4, the disturbed earth 36 extends about pole 32 while undisturbed soil 38 surrounds the disturbed soil 36.

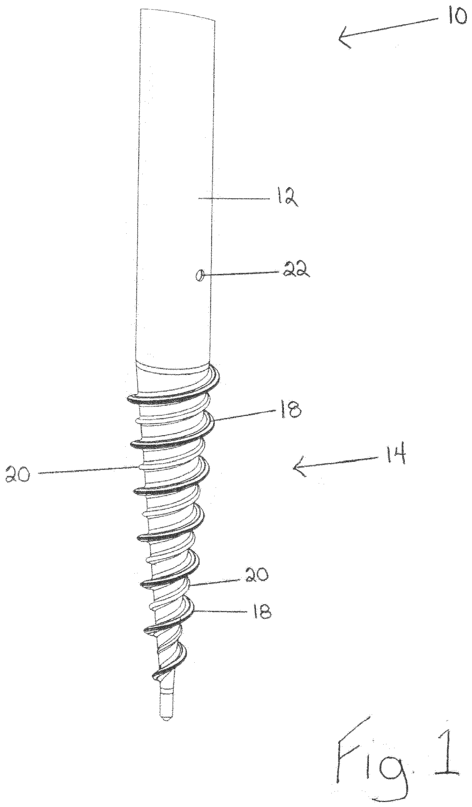

The screwthreaded pole of the present invention is illustrated in Figures 1, 5 and 6 and will now be referred to.
The screwthreaded pole is generally designated by reference numeral 10 and includes a cylindrical upper pole 12 and a tapered lower portion generally designated by reference numeral 14.

Upper pole 12 is of a conventional structure and is preferably of a cylindrical configuration. Pole 12 may be comprised of several different portions secured together. An aperture 22 extends through the side wall of pole 12.

Lower tapered portion 14 is provided with a first helical thread 18 which extends outwardly from the body. A second helical thread 20 is provided intermediate first helical thread 18 and also extends outwardly from the body. It will be noted that thread 18 extends outwardly a greater distance than helical thread 20.

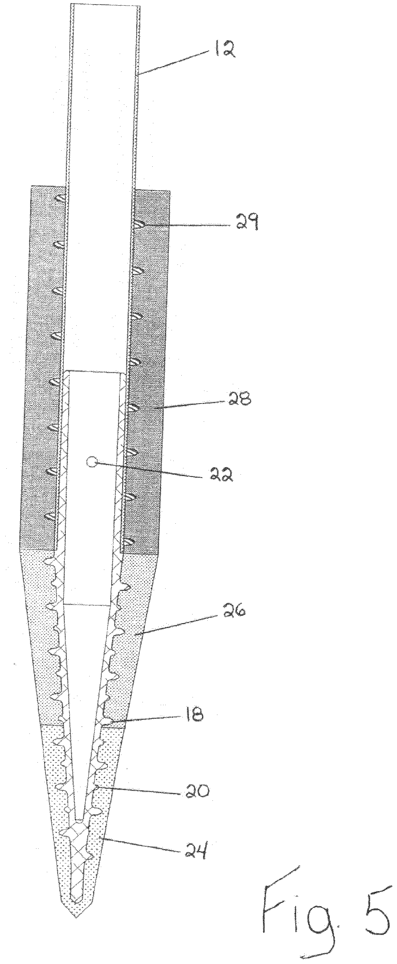

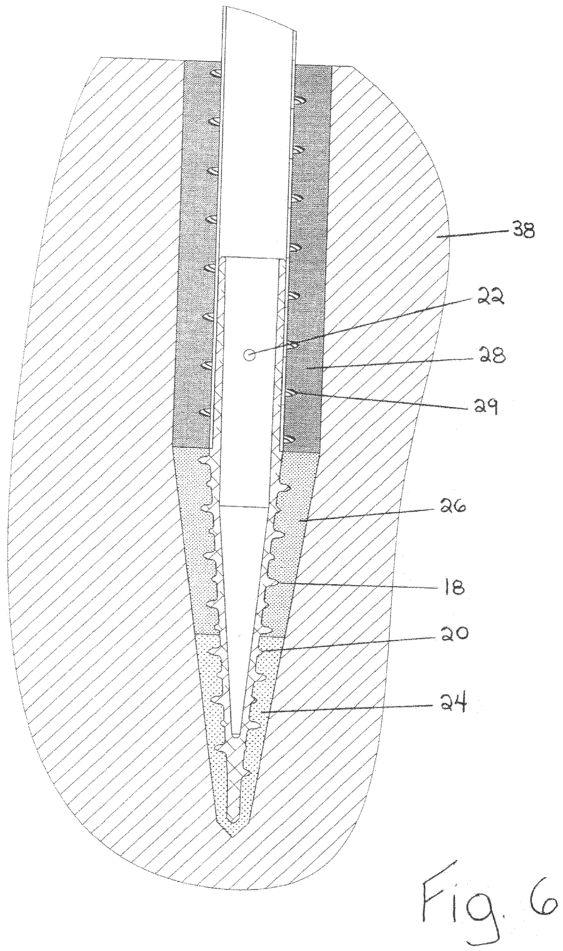

Upon insertion in the soil, and as may be seen in Figures 5 and 6, an area of disturbed earth 24 extends about the lower portion tapered section 14. About this disturbed earth, there is provided a semi-compacted area of earth 26 which is less disturbed than portion 24.

Finally, there is provided a highly compacted portion of earth 28 which has indentations 29 from screwthread 18 therein. This highly compacted earth portion 28 provides a firm support for pole 12.

As shown in Figure 6, remaining undisturbed earth 38 surrounds the portions previously described.

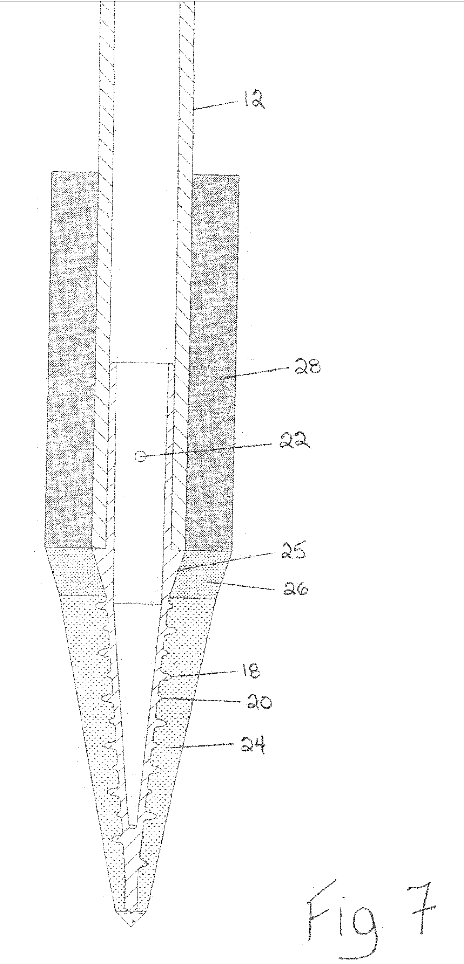

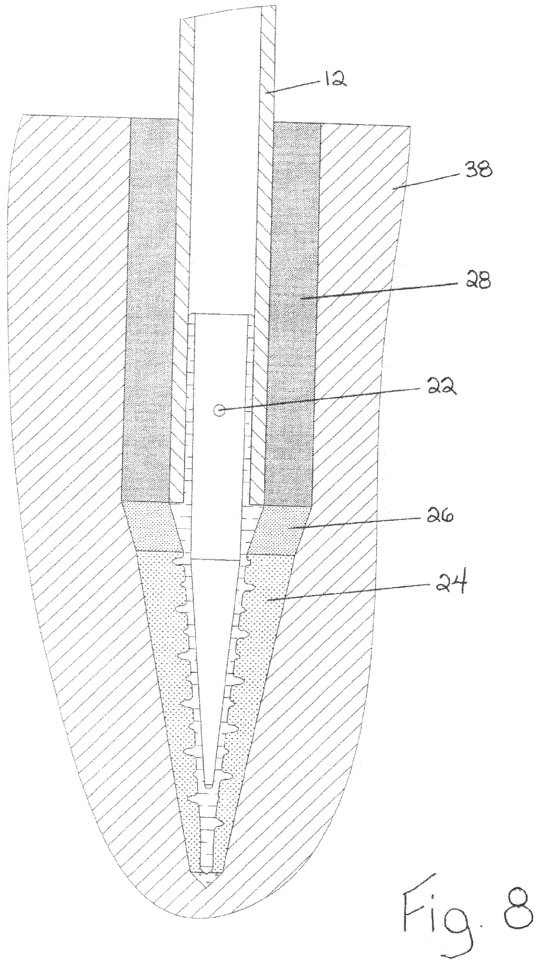

In the embodiment of Figures 7 and 8, similar reference numerals are employed as in the previously described embodiment for common components. In the arrangement shown in Figures 7 and 8, intermediate the lower tapered portion and the pole itself, there is provided a tapered section generally designated by reference numeral 25. This tapered section extends between the threaded portion and the cylindrical portion and an intermediate segment 25 tapers inwardly from the point of joinder with the upper segment through the lower threaded segment. This intermediate segment 25 provides help in compaction of the soil and to ensure that the soil remains compacted.
It will be understood that the above described embodiment is for purposes of illustration only and that changes and modifications may be made thereto without departing from the scope of the invention as defined by the appended claims.

## Claims

1. A pole (10) designed to be inserted into the ground, said pole (10) having a lower tapered segment at one end thereof, said lower tapered segment (14) having double helical threads (18, 20) thereon, and an upper segment (12), wherein a first one (18) of said double helical threads (18, 20) extends outwardly a first distance and a second (20) one of said double helical threads (18, 20) extends outwardly a second distance, **characterised in that** said first distance is larger than said second distance, and said second helical thread (20) is provided intermediate of said first helical thread (18).

2. The pole (10) of Claim 1 wherein said pole (10) is formed of a metallic material.

3. The pole (10) of Claim 1 wherein said pole (10) is formed of a plastic material.

4. The pole (10) of any one of Claims 1 to 3 wherein said first one (18) of said threads (18, 20) extends outwardly a distance of between 5.0 mm and 7.5 mm.

5. The pole(10) of any one of Claims 1 to 4 wherein said second one (20) of said threads (18, 20) extends outwardly a distance of between 2.5 mm and 4.0 mm.

6. The pole (10) of any one of Claims 1 to 5 wherein said helical threads (18, 20) have a lead of between 1 cm and 4 cm.

7. The pole (10) of any one of Claims 1 to 6 wherein said pole (10) includes means for supporting one or more objects thereon.

8. The pole (10) of any one of Claims 1 to 7 further including an intermediate tapered section (25) intermediate said lower tapered segment (14) and said upper segment (12).

9. The pole (10) of Claim 8 wherein said intermediate section (25) is tapering inwardly from a point adjacent said upper segment to a point adjacent said lower tapered segment.

## Patentansprüche

1. Pfosten (10), der zum Einsetzen in den Boden ausgebildet ist, wobei der Pfosten (10) ein unteres verjüngtes Segment an einem Ende desselben aufweist, wobei das untere verjüngte Segment (14) doppelte spiralförmige Gewinde (18, 20) daran aufweist, und wobei der Pfosten (10) ein oberes Segment (12) aufweist, wobei sich ein erstes (18) der doppelten spiralförmigen Gewinde (18, 20) über eine erste Strecke nach außen erstreckt und sich ein zweites (20) der doppelten spiralförmigen Gewinde (18, 20) über eine zweite Strecke nach außen erstreckt, **dadurch gekennzeichnet, dass** die erste Strecke größer ist als die zweite Strecke und das zweite spiralförmige Gewinde (20) zwischenliegend zwischen dem ersten spiralförmigen Gewinde (18) bereitgestellt ist.

2. Pfosten (10) nach Anspruch 1, wobei der Pfosten (10) aus einem metallischen Material gebildet ist.

3. Pfosten (10) nach Anspruch 1, wobei der Pfosten (10) aus einem Kunststoffmaterial gebildet ist.

4. Pfosten (10) nach einem der Ansprüche 1 bis 3, wobei sich das erste (18) der Gewinde (18, 20) über eine Strecke von zwischen 5,0 mm und 7,5 mm nach außen erstreckt.

5. Pfosten (10) nach einem der Ansprüche 1 bis 4, wobei sich das zweite (20) der Gewinde (18, 20) über eine Strecke von zwischen 2,5 mm und 4,0 mm nach außen erstreckt.

6. Pfosten (10) nach einem der Ansprüche 1 bis 5, wobei die spiralförmigen Gewinde (18, 20) eine Steigung von zwischen 1 cm und 4 cm aufweisen.

7. Pfosten (10) nach einem der Ansprüche 1 bis 6, wobei der Pfosten (10) Mittel zum Tragen eines oder mehrerer Gegenstände auf demselben aufweist.

8. Pfosten (10) nach einem der Ansprüche 1 bis 7, ferner aufweisend eine dazwischenliegende verjüngte Sektion (25) zwischen dem unteren verjüngten Segment (14) und dem oberen Segment (12).

9. Pfosten (10) nach Anspruch 8, wobei sich die dazwischenliegende Sektion (25) von einer an das obere Segment angrenzenden Stelle, bis zu einer an das untere verjüngte Segment angrenzenden Stelle, nach innen verjüngt.

## Revendications

1. Poteau (10) conçu pour être inséré dans le sol, ledit poteau (10) ayant un segment effilé inférieur à une extrémité de celui-ci, ledit segment effilé inférieur (14) ayant des filets en double hélice (18, 20) sur celui-ci, et un segment supérieur (12), dans lequel un premier (18) desdits filets en double hélice (18, 20) s'étend vers l'extérieur de l'ordre d'une première distance et un deuxième (20) desdits filets en double hélice (18, 20) s'étend vers l'extérieur de l'ordre d'une deuxième distance, **caractérisé en ce que** ladite première distance est supérieure à ladite deuxième distance, et ledit deuxième filet en hélice (20) est fourni de manière intermédiaire audit premier filet en hélice (18).

2. Poteau (10) selon la revendication 1, dans lequel ledit poteau (10) est formé par un matériau métallique.

3. Poteau (10) selon la revendication 1, dans lequel ledit poteau (10) est formé par une matière plastique.

4. Poteau (10) selon l'une quelconque des revendications 1 à 3, dans lequel ledit premier (18) desdits filets (18, 20) s'étend vers l'extérieur de l'ordre d'une distance comprise entre 5,0 mm et 7,5 mm.

5. Poteau (10) selon l'une quelconque des revendications 1 à 4, dans lequel ledit deuxième (20) desdits filets (18, 20) s'étend vers l'extérieur de l'ordre d'une distance comprise entre 2,5 mm et 4,0 mm.

6. Poteau (10) selon l'une quelconque des revendications 1 à 5, dans lequel lesdits filets en hélice (18, 20) ont un pas compris entre 1 cm et 4 cm.

7. Poteau (10) selon l'une quelconque des revendications 1 à 6, dans lequel ledit poteau (10) comprend des moyens pour supporter un ou plusieurs objets sur celui-ci.

8. Poteau (10) selon l'une quelconque des revendications 1 à 7, comprenant en outre une section effilée intermédiaire (25) entre ledit segment effilé inférieur (14) et ledit segment supérieur (12).

9. Poteau (10) selon la revendication 8, dans lequel ladite section intermédiaire (25) s'effile vers l'intérieur à partir d'un point adjacent audit segment supérieur jusqu'à un point adjacent audit segment effilé inférieur.
